(19) **Europäisches Patentamt**

**European Patent Office**

**Office européen des brevets**

(11) Veröffentlichungsnummer: **0 321 656 B1**

(12) **EUROPÄISCHE PATENTSCHRIFT**

(45) Veröffentlichungstag der Patentschrift: **29.07.92**

(21) Anmeldenummer: **88115065.0**

(22) Anmeldetag: **15.09.88**

(51) Int. Cl.⁵: **F16J 15/32**

(54) **Wellendichtring.**

(30) Priorität: **23.12.87 DE 3743843**
**12.02.88 DE 3804284**

(43) Veröffentlichungstag der Anmeldung:
**28.06.89 Patentblatt 89/26**

(45) Bekanntmachung des Hinweises auf die
Patenterteilung:
**29.07.92 Patentblatt 92/31**

(84) Benannte Vertragsstaaten:
**AT ES FR GB IT**

(56) Entgegenhaltungen:
**DE-C- 901 976**

(73) Patentinhaber: **GOETZE AG**
**Bürgermeister-Schmidt-Strasse 17**
**W-5093 Burscheid 1(DE)**

(72) Erfinder: **Bernd, Stephan**
**Endringhausen 5**
**W-5630 Remscheid-Lennep(DE)**

## Beschreibung

Die Erfindung betrifft einen Wellendichtring, bestehend aus einem Grundkörper aus elastomerem Werkstoff mit einem gegebenenfalls metallisch verstärkten Gehäuseteil und einer gegebenenfalls von einer Feder beaufschlagten Dichtlippe mit einer angepreßten Dichtkante, wobei im Einbauzustand die Dichtkante unter radialer Verformung auf der Wellenoberfläche unter Bildung einer definierten Laufzone aufliegt.

Die Abdichtwirkung eines Wellendichtringes, wie er beispielsweise in DIN 3760 definiert ist, beruht darauf, daß die Dichtkante mit radialer Spannung gegen die abzudichtende Wellenoberfläche gedrückt wird. Durch die Verformung des Gummiwerkstoffes im Dichtkantenbereich entsteht eine Laufzone mit definierter Berührungsbreite. Bei Rotation der Welle wird die Dichtkante von einem Flüssigkeitsfilm von der Mediumsseite unterspült, so daß die Dichtkante nicht unmittelbar auf der Wellenoberfläche aufliegt. Obwohl das Fluid unter die Dichtkante gelangt und dort einen Schmierfilm bildet, fließt es nicht auf die Luftseite der Dichtung.

Eine in der ATZ Automobiltechnische Zeitschrift 88 (1986), Seite 39 bis 45, veröffentlichte Dichtungstheorie erklärt dieses Phänomen. Bedingt durch die die Dichtkante bildenden Winkel auf der Mediumsseite im Bereich zwischen 40 und 50° und auf der Luftseite zwischen 20 und 30°, stellt sich im eingebauten Zustand eine auf den Dichtlippenquerschnitt bezogene asymmetrische Pressungsverteilung ein und damit auch eine asymmetrische Verzerrungsstruktur. Diese Struktur ermöglicht eine hydrodynamische Förderwirkung von der Luftseite zur Mediumsseite.

Aus wirtschaftlichen Gründen werden heute überwiegend Wellendichtringe mit angepreßten Dichtkanten hergestellt. Eine Nachbearbeitung durch Schleifen oder Abstechen ist dadurch nicht mehr notwendig. Dieses Fertigungsverfahren bedingt, daß die Dichtkante nicht absolut scharfkantig ausgebildet ist, sondern einen kreisförmigen Übergangsbereich zwischen den beiden Dichtkantenwinkeln aufweist. Wellendichtringe mit angepreßter Dichtkante weisen aber im eingebauten Zustand zunächst eine Pressungsverteilung auf, deren Maximum etwa in der Mitte der Berührungsbreite der Laufzone liegt. Erst nach dem Einlaufen der Dichtung wirken sich die Dichtkantenwinkel auf die Pressungsverteilung aus. Für den Einlaufvorgang ist zunächst nicht die Gestaltung der Winkel maßgebend, sondern der Übergangsbereich zwischen den Winkeln.

Basierend auf der genannten Dichtungstheorie, liegt der Erfindung die Aufgabe zugrunde, die Abdichtwirkung eines Wellendichtringes dahingehend zu verbessern, daß bereits während des Einlaufens, das heißt von Anfang an, eine optimierte Dichtwirkung erzielt wird.

Diese Aufgabe wird erfindungsgemäß dadurch gelöst, daß vor dem Einbau des Wellendichtringes die Dichtkante, im Querschnitt betrachtet, mit einer inkonstanten Kontur ausgebildet ist, wobei der lichte Durchmesser der Dichtkante im Bereich der Berührungsbreite der Laufzone auf der Seite des abzudichtenden Mediums liegt. Dieser Lehre liegt die Erkenntnis zugrunde, daß die medium- und luftseitige Kontur der Dichtkante der Dichtlippe einen Einfluß auf die hydrodynamische Förderwirkung zwischen Dichtlippe und Wellenoberfläche hat. Zur Steigerung der Dichtfunktion muß der lichte Durchmesser der Dichtkante im nicht eingebauten Zustand auf der Mediumsseite liegen. Damit wird die Laufzone mit der höchsten radialen Pressung zur Mediumsseite verlagert und absolut eine Leckage mit Beginn des Betriebszustandes vermieden.

Durch Pressen und Vulkanisieren der Dichtkante im Formwerkzeug weisen die Dichtkanten minimale Radien von ca. 0,05 mm auf. Nach der neuen Lehre wird erfindungsgemäß die Dichtkante nicht mehr mit einem konstanten kleinen Radius, sondern mit einer definierten, die Dichtfunktion verbessernden Kontur ausgebildet.

Im Rahmen der weiteren Ausgestaltung der Erfindung wird vorgeschlagen, die Dichtkantenkontur aus mindestens zwei verschiedenen, ineinander übergehenden Radien zu gestalten, wobei der kleinere Radius auf der Seite des abzudichtenden Mediums liegt. Denkbar ist es, daß axial zwischen den beiden Radien ein durch eine gemeinsame Tangente gebildeter Übergangsbereich vorgesehen wird. Damit wird in vorteilhafter Weise ein axial relativ breiter Dichtkantenquerschnitt mit verbesserter Dichtwirkung geschaffen. Zur Optimierung der Pressungsverteilung wird vorgeschlagen, daß der von der Tangente gebildete Übergangsbereich unter einem spitzen Winkel zur Dichtungsachse verläuft.

Die zuvor beschriebenen Ausbildungsvarianten sind fertigungstechnisch besonders einfach realisierbar. Für eine optimale Auslegung des Dichtkantenquerschnittes unter Berücksichtigung verschiedener Einflußfaktoren, wie beispielsweise des Dichtlippenwerkstoffes, des abzudichtenden Mediums, der Dichtlippengeometrie u.a., erscheint es vorteilhaft, die Dichtkantenkontur für den besonderen Anwendungsfall nach einer mathematisch definierten Funktion zu gestalten, wobei das Krümmungsmaximum auf der Seite des abzudichtenden Mediums liegt.

Die Erfindung ist anhand eines Ausführungsbeispieles in der Zeichnung dargestellt. Es zeigen:

Figur 1 einen Querschnitt durch einen Wellendichtring im Einbauzustand

Figur 2 eine starke Vergrößerung eines vorbekannten Dichtkantenquerschnittes

Figur 3 eine starke Vergrößerung eines erfindungsgemäß ausgebildeten Dichtkantenquerschnittes.

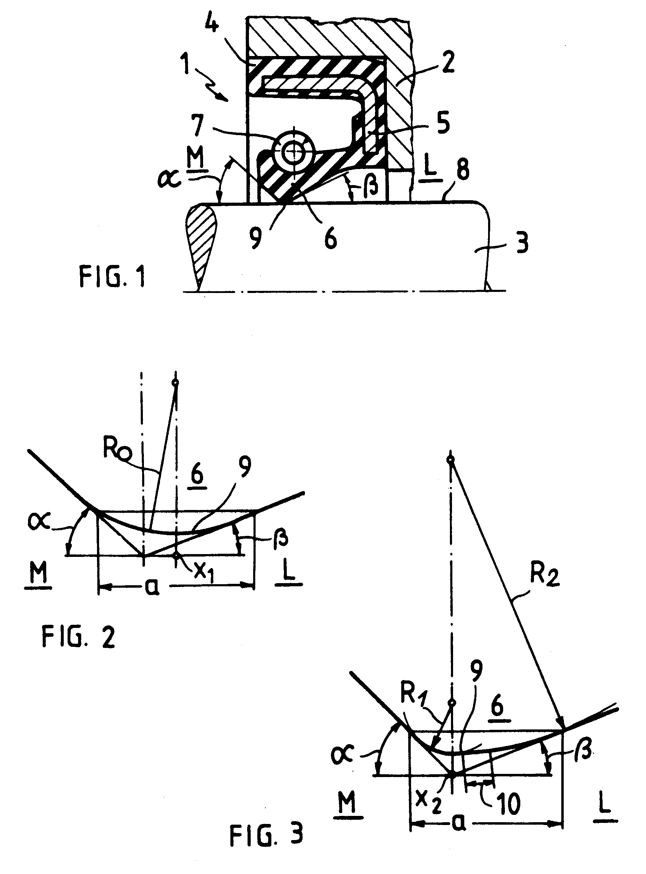

Der in Figur 1 im Querschnitt dargestellte Wellendichtring 1 ist in einem Maschinenteil 2 zur Abdichtung einer Welle 3 eingebaut. Der Wellendichtring 1 besteht aus elastomerem Werkstoff und weist ein Gehäuseteil 4 mit einem einvulkanisierten Versteifungsring 5 und eine Dichtlippe 6 mit außen aufliegendem Federring 7 auf. Der Querschnitt der Dichtlippe 6 ist nahe der Wellenoberfläche 8 dreieckförmig.

Die beiden Winkel Alpha und Beta bilden eine Dichtkante 9, die bereits in der Vulkanisierform angepreßt wird. Mit M ist die Mediumseite und mit L die Luftseite bezeichnet.

In Figur 2 ist eine starke Vergrößerung der Dichtlippe 6, wie sie zur Zeit üblicherweise ausgebildet ist, dargestellt. Durch Fertigpressen der Dichtkante weist die Dichtkante 9 zwischen den Dichtkantenwinkeln Alpha und Beta einen kreisförmigen Übergangsbereich mit einem Radius R0 von ca. 0,05 mm auf. Im eingebauten Zustand entsteht eine definierte Laufzone, die während des Einlaufvorganges eine definierte Berührbreite a aufweist. Bedingt durch den konstanten Radius R0, liegt der lichte Durchmesser der Dichtkante etwa in der Mitte der Berührbreite a (X1).

In Figur 3 ist eine starke Vergrößerung des Dichtkantenbereiches der Dichtlippe 6 im nicht eingebauten Zustand dargestellt. Nach der Lehre der Erfindung weist die Dichtlippe 6 im Bereich der Dichtkante 9 ein Profil mit einer inkonstanten Kontur auf, die sich im wesentlichen aus zwei unterschiedlichen Radien R1 und R2 und einem beide Radien tangierenden Übergangsbereich 10 zusammensetzt. Dabei liegt der Radius R1 mit der stärkeren Krümmung auf der Mediumseite M und bildet den lichten Durchmesser der Dichtkante 9. Der Radius R2 mit der geringeren Krümmung liegt auf einem geringfügig größeren Durchmeser, so daß der Übergangsbereich 10 unter einem spitzen Winkel zur Ringachse verläuft. Diese Maßnahme bewirkt, daß der lichte Durchmesser der Dichtkante auf der Mediumsseite M der Berührbreite a liegt (X2).

Zur Erzeugung einer im Einlaufzustand dichten Dichtkante 9 kann die Kontur auch noch einer oder mehreren mathematischen Funktionen bis 3. Grades erzeugt werden.

**Patentansprüche**

1. Wellendichtring, bestehend aus einem Grundkörper aus elastomerem Werkstoff mit einem gegebenenfalls metallisch verstärkten Gehäuseteil und einer gegebenenfalls von einer Feder beaufschlagten Dichtlippe mit einer angepreßten Dichtkante, wobei im Einbauzustand die Dichtkante unter radialer Verformung auf der Wellenoberfläche unter Bildung einer definierten Laufzone aufliegt, dadurch gekennzeichnet, daß die Dichtkante (9), im Querschnitt betrachtet, mit einer inkonstanten Kontur ausgebildet ist, wobei der lichte Durchmesser der Dichtkante (9) im Bereich der Berührungsbreite (a) der Laufzone auf der Seite des abzudichtenden Mediums (M) liegt.

2. Wellendichtring nach Anspruch 1, dadurch gekennzeichnet, daß die Dichtkantenkontur aus mindestens zwei verschiedenen, ineinander übergehenden Radien (R1, R2) gebildet ist, wobei der kleinere Radius (R1) auf der Seite des abzudichtenden Mediums (M) liegt.

3. Wellendichtring nach den Ansprüchen 1 und 2, dadurch gekennzeichnet, daß axial zwischen den beiden Radien (R1, R2) ein durch eine gemeinsame Tangente gebildeter Übergangsbereich (10) vorgesehen ist.

4. Wellendichtring nach den Ansprüchen 1 bis 3, dadurch gekennzeichnet, daß der von der Tangente gebildete Übergangsbereich (10) unter einem spitzen Winkel zur Dichtungsachse verläuft.

5. Wellendichtring nach Anspruch 1, dadurch gekennzeichnet, daß die Dichtkantenkontur einer mathematisch definierten Funktion entspricht, deren Krümmungsmaximum auf der Seite des abzudichtenden Mediums liegt.

**Claims**

1. Shaft sealing ring, consisting of a base body of elastomeric material with a housing part reinforced if desired with metal and a sealing lip, biased by a spring if desired, with a pressed sealing edge, wherein the sealing edge bears in the installed state on the shaft surface with radial deformation and formation of a defined running zone, characterized in that the sealing edge (9), viewed in cross-section, is shaped with a non-uniform contour, whereby the clear diameter of the sealing edge (9) lies in the region of the contact width (a) of the running zone on the side of the medium (M) to be sealed.

2. Shaft sealing ring according to claim 1, characterized in that the sealing edge contour is formed from at least two different radii (R1, R2) merging into one another, where the smaller radius (R1) lies on the side of the medium (M) to be sealed.

3. Shaft sealing ring according to claims 1 and 2, characterized in that a transition (10) formed by a common tangent is provided axially between the two radii (R1, R2).

4. Shaft sealing ring according to claims 1 to 3, characterized in that the transition region (10) formed by the tangent extends at an acute angle to the seal axis.

5. Shaft sealing ring according to claim 1, characterized in that the sealing edge contour corresponds to a mathematically defined function whose maximum curvature lies on the side of the medium to be sealed.

**Revendications**

1. Joint d'arbre annulaire, consistant en un corps de base en matériau élastomère, avec une partie de carter éventuellement renforcée par un métal, et une lèvre d'étanchéité éventuellement frettée par un ressort, avec une arête d'étanchéité pressée, de sorte que lorsque le joint est monté, l'arête d'étanchéité est en appui sur la surface extérieure de l'arbre en se déformant radialement, en formant une portée définie, caractérisé en ce que l'arête d'étanchéité (9), vue en coupe, est formée avec un contour non constant, de sorte que le diamètre intérieur du bord d'étanchéité (9) se trouve dans le domaine de la largeur de contact (a) de la portée, du côté du fluide (M) à isoler.

2. Joint annulaire d'arbre selon la revendication 1, caractérisé en ce que le contour de l'arête d'étanchéité est formé d'au moins deux rayons différents (R1,R2), qui se raccordent, le plus petit rayon (R1) étant situé du côté du fluide (M) à isoler.

3. Joint annulaire d'arbre selon la revendication 1 ou la revendication 2, caractérisé en ce qu'une zone de transition (10), formée par une tangente commune, est prévue axialement ente les deux rayons (R1,R2).

4. Joint annulaire d'arbre selon une des revendications 1 à 3, caractérisé en ce que la zone de transition (10) formée par la tangente, forme un angle aigü avec l'axe du joint.

5. Joint annulaire d'arbre selon la revendication 1, caractérisé en ce que le contour de l'arête d'étanchéité correspond à une fonction mathématiquement définie, dont le maximum de courbures se trouve du côté du fluide à isoler.

FIG. 1

FIG. 2

FIG. 3